# EUROPEAN PATENT SPECIFICATION

(11) **EP 2 908 207 B1**
(45) Date of publication and mention of the grant of the patent: **12.04.2017**
(21) Application number: 14000506.7
(22) Date of filing: 12.02.2014
(51) Int. Cl.: G06F 1/16

(54) **Folding and cleaning screen cover**
Faltbare Displayabdeckung mit Reinigungsfunktion
Couverture pliante et nettoyante pour écran

(43) Date of publication of application: 19.08.2015
(73) Proprietor: Slabko-Le Devehat, Irina, 56310 Melrand (FR); Le Devehat, Hervé, 56310 Melrand (FR)
(72) Inventor: Slabko-Le Devehat, Irina, 56310 Melrand (FR); Le Devehat, Hervé, 56310 Melrand (FR)

(56) References cited:
- US-A1- 2001 003 090
- US-A1- 2002 154 099
- US-B1- 8 138 869

## Description

The invention is classified among accessories for various electronic devices such as cellular phones, smart phones, tablet computers, etc.

There is known a screen cover which has an insert piece located between inner and outer layers and configured for fastening directly on an object or carrying case of an object (refer to publication US 0008138869 B1 dated March 20, 2012).

Drawback of the known cover is its complexity and inconvenience of use in the course of cleaning of screen of any object, since the cover design provides its folding which requires use of both hands.

US 20010003090 A1 and US 20020154099 A1 disclose screen covers / protectors of flexible material. The technical result, the invention herein aims at obtaining, is simplification of cover design and improvement of screen cleaning quality with simultaneous enhancement in convenience of cover use in the course of cleaning.

The technical result specified is obtained through the screen cover containing an insert piece located between inner and outer layers and configured to be fastened directly on an object or its carrying case, the insert piece designed to be flexible and the insert piece designed to have variable rigidity increasing in the direction of its fastening on the object or its carrying case, for example, in the form of triangle, rectangle or trapezoid, and it can have the same shape as that of the cover.

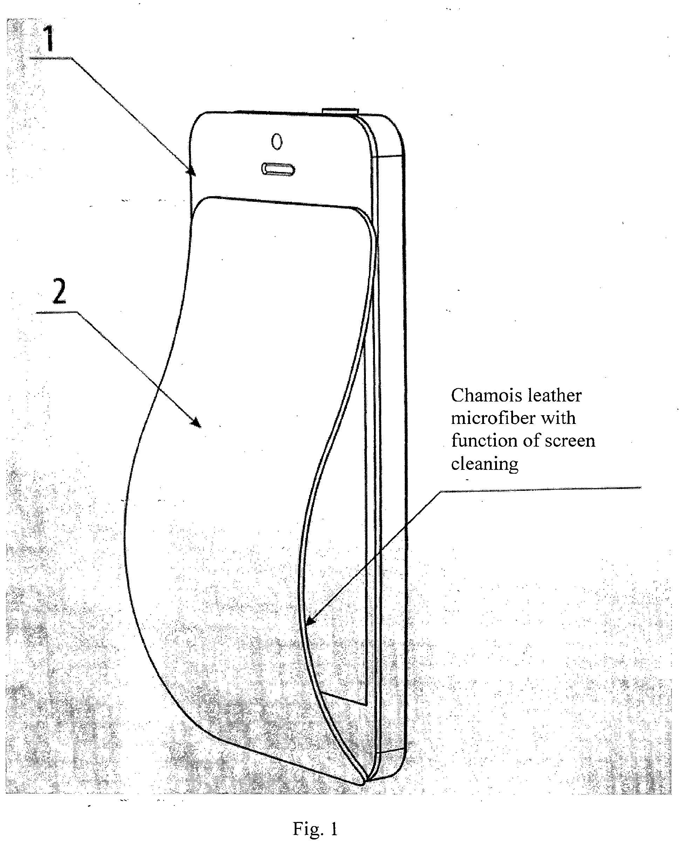

Character of the invention is illustrated on a schematic drawing. Cover 2 covering the screen consists of inner and outer layers (which can be made of leather, textile, rubber or other known soft material). Flexibility of cover 2 (variable rigidity) can be provided by inner dense elements (insert pieces) of various geometrical configuration made of plastic, foil, strong fabric or other materials. Shape can be different: triangle, rectangle, trapezoid, etc. In case of triangular or trapezoid shape the widest part of the insert piece is located closer to cover base (place of cover fastening on object or carrying case 1), while the narrowest part is located from clasp side. However, generally, flexibility (variable rigidity) can be achieved through introduction of any part between layers of cover 2 which has certain flexibility. A certain Figure 1 as provided shows cover 2 fastened to carrying case 1 (and it can be configured made integrally with it as a whole).

The cover has new useful function, i.e. gliding along object (eg. smart phone) screen when opening it only by means of one hand. Bottom (inner) layer of cover 2 is gliding along the screen until it throws over towards back end of the object (eg. smart phone).

## Claims

1. Screen cover (2) containing an insert piece located between inner and outer layers and configured to be fastened directly on an object or its carrying case wherein the insert piece is designed to be flexible, **characterised in that** the insert piece is designed to have variable rigidity which increases towards its fastening on the object or its carrying case.

2. Screen cover as per claim 1 wherein the insert piece is configured in the form of a triangle, rectangle or trapezoid, or the same shape as that of the cover.

## Patentansprüche

1. Der Bildschirmdeckel (2) mit einer biegsamen Einlage, die sich zwischen Innen-und Außenschichten befindet. Diese Einlage ist so erarbeitet, dass es ermöglicht diese Einlage direkt auf dem Objekt oder auf seiner Umfüllung zu fixieren. Die Einlage hat eine Wechselsteifigkeit, die in der Richtung ihres Fixierens auf dem Objekt oder auf seiner Umhüllung steigern wird.

2. Der Bildschirmdeckel, laut Punkt 1, unterscheidet sich davon, dass die Einlage eine Dreicek-, Rechteck-, oder Trapezform hat. Diese Einlage kann auch der Form des Deckels selbst entsprechen.

## Revendications

1. Le couvercle d'écran (2) est équipé d'une pièce d'insertion, située entre les couches intérieure et extérieure, qui est conçue d'une manière, permettant à la fixer directement sur l'article ou sur l'étui. La pièce d'insertion présente la rigidité variable, s'augmentant dans la direction de sa fixation sur l'article ou l'étui de l'article.

2. Conformément au point 1 le couvercle d'écran se diffère par le fait que la pièce d'insertion présente la forme triangulaire, rectangulaire ou trapézoïdale, ainsi qu'elle peut coïncider avec la forme du couvercle lui-même.
